# EUROPEAN PATENT APPLICATION

(11) **EP 0 707 152 A1**
(43) Date of publication of application: **17.04.1996**
(21) Application number: 95202406.5
(22) Date of filing: 06.09.1995
(51) Int. Cl.: F16B 2/12, F16M 13/02, F21V 21/08

(54) **Holder device**

(30) Priority: 13.10.1994 SE 9403485
(71) Applicant: SMD Office Design AB, S-331 42 Värnamo (SE)
(72) Inventor: Henriksson, Kjell, S-331 21 Värnamo (SE)
(74) Representative: Wallengren, Yngvar

(57) **Abstract**

A holder device for such an anchorage device (4) as is intended to secure, on a table top (1), a terminal arm or a lighting fixture. The anchorage device includes, first, an upper portion with an upper shank (16) parallel with the table top (1), and a downwardly directed connecting portion (17), secondly a lower portion with a lower shank (18) parallel with the table top (1), and an upwardly directed connecting portion (19), and thirdly screws (22) for interconnecting the upper portion and the lower portion in optional mutual positions. Each respective shank (16, 18) of the upper portion and the lower portion makes approximately a right angle with each respective connecting portion (17, 19, respectively). The screws (22), whose clamping direction is transversely directed in relation to the plane of extent of the shanks, are disposed for drawing the shanks towards one another. A retainer member (20) is provided for retaining the connecting portions (17, 19) in an optional position for abutment against one another.

## Description

### TECHNICAL FIELD

The present invention relates to a holder device for an anchorage device of the type which is intended to secure, on a support such as a table, a terminal arm, a lighting fixture or the like, and comprises an upper portion with an upper shank disposed above the support, a downwardly directed connecting portion outside the edge of the support, a lower portion with a lower shank located beneath the support, an upwardly directed connecting portion outside the edge of the support, and means for interconnecting the upper portion and the lower portion in optional mutual positions.

### BACKGROUND ART

Table fittings for securing, for instance, terminal arms, lighting fixtures, brackets for different tools or other equipment are previously known in the art. Such table fittings are traditionally designed in the same basic manner as a G-clamp which has a screw which is applied from beneath against the work panel or top of the table. A design and construction of this type may function satisfactorily on many occasions, but, for reasons of space, cannot be used on tables that are provided with a large border or, even worse, a so-called cable or flex conduit along its edge portion. In the alternative comprising the flex conduit, there is a gap of a few tenths or so of a millimetre in height, this gap being intended for the insertion of cables or flexes into the conduit. Naturally, such a small space entails that it is not possible to employ a G-clamp like arrangement with a clamping screw placed on the underside of the table.

An anchorage device of the type under consideration here is also previously known in the art and is designed to be able to be put to use despite the presence of a cable conduit or the like. This version comprises a downwardly open cup-shaped body (or 'rose') which is placed on the upper face of the table and is provided with a journal pin for the pivotal securement of the terminal arm or lighting fixture. This design further includes a U-shaped stirrup composed of two angled pieces, in which the distance between the parallel shanks is adjustable in that the angled pieces are adjusted in relation to one another by the intermediary of elongate through apertures which house screws. In this instance, the direction of the screws is parallel with the plane of extent of the table top. For securing the anchorage device to the table, the upper shank of the U-shaped stirrup may be drawn by means of a screw into the space which is interiorly defined inside the cup-shaped body.

This design may also be employed in such situations where a cable conduit is provided, since the lower shank of the U-shaped stirrup can be slid in between the cable conduit and the underside of the table top. However, this particular design offers problems inasmuch as the interconnection of the two angled pieces for forming the U-shaped stirrup is extremely critical both as regards accuracy of adjustment and, above all, mechanical strength. Thus, it is sufficient for the user of this particular version to fail to tighten either of the screws between the two angled pieces sufficiently for the pieces to come loose from one another under the action of dynamic stresses, or at any rate be displaced so far that an oblique loading occurs.

### PROBLEM STRUCTURE

The present invention has for its object to design the holder device intimated by way of introduction so that it permits accurate and simple adjustment in relation to the thickness of the table top. The present invention further has for its object to design the holder device such that, despite the presence of dynamic loadings, it displays very good mechanical strength and does not run the risk of altering its adjustment setting or of coming loose. Further, the present invention relates to a holder device which is simple and economical in manufacture and is aesthetically appealing.

### SOLUTION

The objects forming the basis of the present invention will be attained if the holder device intimated by way of introduction is characterized by a retainer member which is disposed to retain the connecting portions in an optional position for abutment against one another, and a clamping device whose clamping direction is transversely directed, preferably approximately at right angles, to the plane of extent of the shanks for drawing the shanks towards one another.

Further advantages will be attained according to the present invention if the device according to the present invention is also given one or more of the characterizing features as set forth appended Claims 2 to 10.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a side elevation of an anchorage device which employs a first embodiment of the holder device according to the present invention;
- Fig. 2: further shows the device according to the present invention, approximately according to Fig. 1 in perspective; and
- Fig. 3: is a view corresponding to that of Fig. 1 of an anchorage device employing a second embodiment of the device according to the present invention.

### DESCRIPTION OF PREFERRED EMBODIMENT

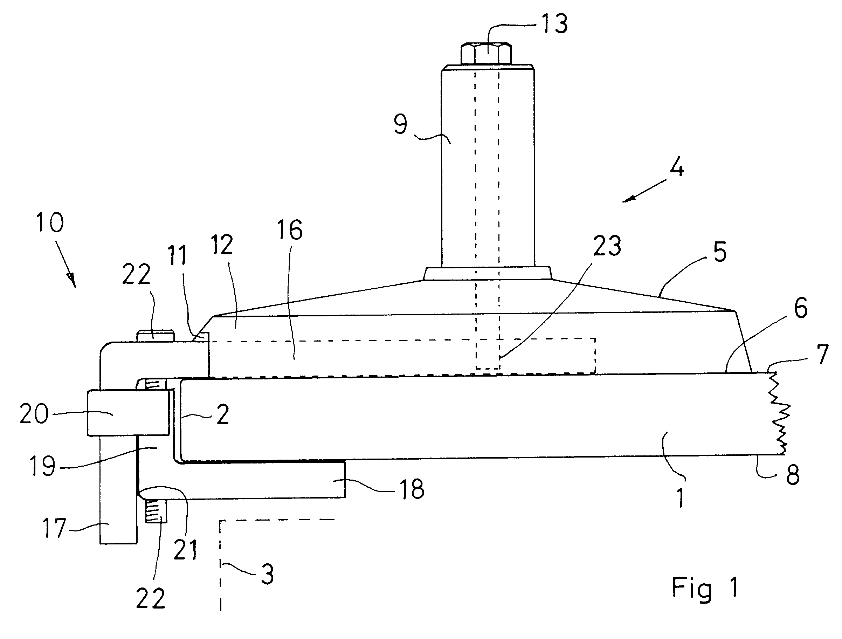

In Fig. 1, reference numeral 1 relates to a support structure which, in practice, may consist of a table top or the like. At a slight distance beneath the table top 1 and in the proximity of its edge 2, broken lines 3 indicate the position of a cable conduit, a tubular profile rigidifying the edge portion of a table top, or some similar construction. The detailed design of this cable conduit, tubular profile etc. is of no critical importance to the present invention, as long as the distance up to the underside of the table top 1 is sufficiently great to permit employment of the device according to the present invention. In this context, the necessary distance is of a minimum of between 5 and 10 millimetres.

Reference numeral 4 relates to an anchorage device in which the holder device according to the present invention is employed. The anchorage device includes a downwardly open cup-shaped body 5 which abuts against the upper side 7 of the table top 1, either with its lower edge 6 or with feet (not shown on the Drawings) arranged at this edge. The cup-shaped body 5 is provided with an upwardly directed, preferably cylindrical journal pin 9 on which the terminal arm, lighting fixture or the like is pivotally journalled.

The holder device 10 extends in through an aperture 11 in a downwardly directed side wall 12 to the cup-shaped body 5. Interiorly therein, the holder device 10 cooperates with a clamping screw 13 by means of which the holder device 10 may be drawn upwards in the space which is defined interiorly inside the cup-shaped body. Since the holder device 10 grasps in U-shaped fashion about the edge portion of the table top 1 while at the same time being drawn upwards, a downwardly directed urging will be realised of the edge 6 (or possibly the feet) of the cup-shaped body 5, against the upper side 7 of the table top. Hereby, the entire anchorage device 4 will be reliably clamped in place on the edge portion of the table top.

The holder device includes an upper portion 14 and a lower portion 15. Both the upper portion and the lower portion are angled in shape and have an upper shank 16 and a downwardly directed connecting portion 17, and a lower shank 18 and upwardly direction connecting portion 19, respectively. The two connecting portions 17 and 19 are disposed in mutually optional positions in abutment against one another. The connecting portions are held in the above-described positions by means of one or more retainer members which are designed in such a manner that the connecting portions will be adjustable in relation to one another in response to the thickness of the table top 1.

In the embodiments shown on the Drawings, the retainer member further includes a stirrup 20 which is gently U-shaped and which, with its shanks in the embodiment according to Fig. 1, is secured to the upwardly directed connecting portion 19 and embraces (or accommodates substantially without play but allowing displacement) the downwardly directed connecting portion 17. As a result, the upper portion and the lower portion will be able to be displaced in relation to one another in response to the thickness of the table top 1.

The stirrup 20 is located at the upper end of the upwardly directed connecting portion 19 and is therefore located most distally from the part of the connecting portion connected to the shank 18. The stirrup 20 may suitably be produced from material having approximately rectangular cross section, which is fixedly welded in the connecting portion.

As a result of the above-described plating of the stirrup 20, it will be largely subjected to a tractive loading if attempts are made to screw the upper shank 16 and the lower shank 18 away from one another. In this instance, a pressure loading will rest between the lower edge portion 21 of the upwardly directed connecting portion 19 and the part of the downwardly directed connecting portion 17 abutting thereagainst.

The holder device 10 further includes a clamping device 22 whose clamping direction is transversely directed, preferably approximately at right angles, to the plane of extent of the shanks 16 and 18. The clamping direction will hereby coincide with the thickness direction of the table top 1. The clamping device 22 is designed so as to permit adjustment of the distance between the two shanks 16 and 18 so that this distance may be adapted to table tops 1 of different thicknesses. However, another purpose served by the clamping device is to be able to urge the shanks 16 and 18 towards the edge portion of the table top and transfer, to the lower shank 18 the clamping force which is generated on tightening of the clamping screw 13 of the anchorage device 4.

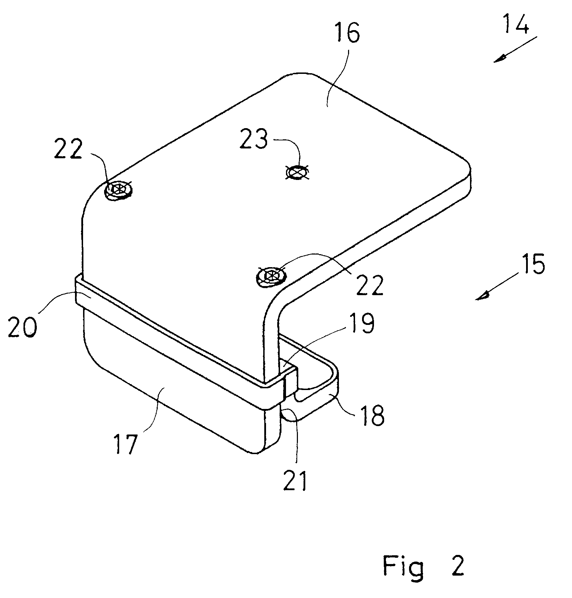

In the embodiment illustrated in Figs. 1 and 2, the clamping device 22 comprises two screws which extend through apertures in the part of the upper shank 16 located most proximal the downwardly directed connecting portion. The screws are accommodated in correspondingly threaded bores in the upwardly directed connecting portion 19 of the lower portion. By the placing and design of the stirrup 20 and the cooperation between the lower edge portion 21 of the connecting portion 19 and the corresponding portion on the connecting portion 17, no substantial transverse force will be applied to the screw or clamping device 22 when this tightened. The reason for this is that the major part of the forces will be taken up directly between the connecting portions and the stirrup 20. It may, however, be appropriate to design the fit between the different components in such a manner that the screw, on being tightened, is subjected to a minor transverse force which is sufficiently great to prevent the screw, by friction, from coming loose in its thread as a result of dynamic forces against the device according to the invention.

In Fig. 2, reference numeral 23 relates to a threaded aperture in the upper shank 16. This threaded aperture is intended for cooperation with the clamping screw 13 in the anchorage device 4.

On mounting of the anchorage device 4 to a table top 1, both the screw 13 and the screws 22 are backed-off. Thereafter, the anchorage device 4 is slid in on the upper side of the table top 1 at the same time as the holder device 10 has its upper shank 16 placed on the upper side of the table top and its lower shank 18 placed on its underside between this side and the cable conduit 3. When the correct position for the anchorage device has been established, the screws 22 are tightened so that the shanks 16 and 18 at least come into a rigid engagement with or abutment against the edge portion of the table top 1. In such instance, it is advantageous if the surfaces of the shanks (in particular that of the lower shank 18) facing towards the table top be provided with some frictional material. Suitably however, the screws 22 are tightened so hard that the holder device 10 will clamp relatively tightly about the edge portion of the table top. In a subsequent tightening of the screw 13, a downwardly directed force will be generated against the cup-shaped body 5 so that its lower edge (and possibly its feet) is urged against the upper side 7 of the table top 1. In this context, it is of no consequence that the screw 13 strives to reduce the abutment pressure between the upper shank 16 and the table top 1, since the cup-shaped body 5 will instead be urged against the upper side of the table top at the same time as the abutment pressure between the lower shank 18 and the underside 8 of the table top is increased under the action of the screw 13.

### DESCRIPTION OF ALTERNATIVE EMBODIMENTS

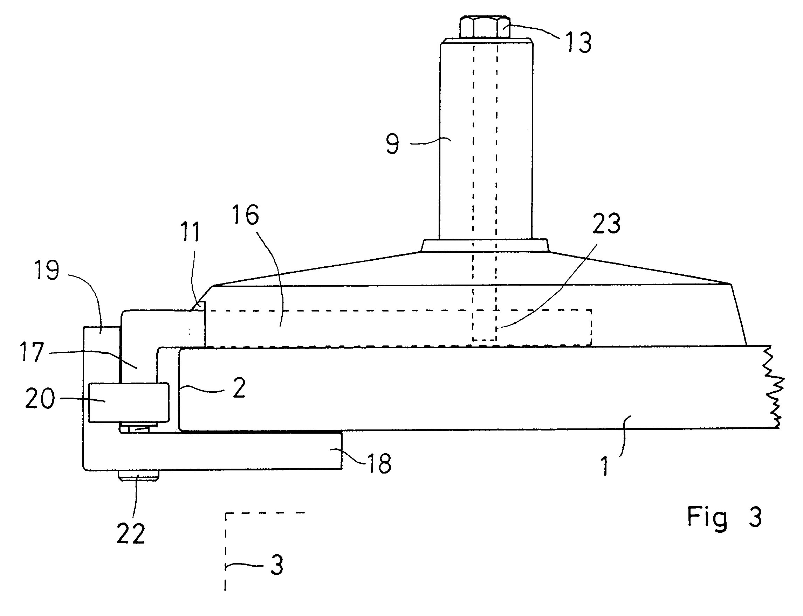

In Fig. 1, the lower portion 15 may be considered as an inner portion, since its connecting portion 19 is located most proximal the edge 2 of the table top 1, while the connecting portion 17 of the upper portion 14 is located outside the connecting portion 19. In the embodiment according to Fig. 3, the situation is the reverse, in that the downwardly directed connecting portion 17 of the upper portion 14 is located most proximal the edge 2 of the table top 1. In this embodiment, the placing of the stirrup 20 is also the reverse, so that it is placed at that end of the upwardly directed connecting portion 19 which is located most proximal the lower shank 18. In this embodiment, the placing of the screw 22 is also the reverse, in that the screw extends through a free bore in the lower shank 18 and into a correspondingly threaded bore in the downwardly directed connecting portion 17.

As an alternative to the above-described placing of the screw 22, the screw may be placed inside the innermost connecting portion, between this portion and the edge 2 of the table top. In an embodiment analogous with that shown in Fig. 1, the screw would, therefore, extend through a free bore in the upper shank 16 and into a correspondingly threaded bore in the lower shank 18. In one embodiment analogous with that illustrated in Fig. 3, the screw 22 would extend through a free bore in the lower and into a correspondingly threaded bore in the upper shank 16.

It is also possible, according to Figs. 1 and 3, to place the screw 22 inverted so that, in Fig. 1, it extends through a free bore in the lower connecting portion 19 and is in threaded engagement with the upper shank 16. Correspondingly, and in accordance with Fig. 3, the screw 22 may extend through a free bore in the upper connecting portion 17 and be in threaded engagement with the lower shank 18.

In the foregoing, the retainer member 20 has been described as a stirrup which is secured in either of the connecting portions 17 and 19 and which extends about and accommodates the other connecting portion 19 or 17 respectively. In a modified embodiment analogous with the embodiment according to Figs. 1 and 2, it is possible to provide the outer and downwardly directed connecting portion 17 with elongate, vertical apertures through which screws are passed, in which event the ends of the screws are accommodated in correspondingly threaded bores in the upwardly directed connecting portion 19 on the lower portion 15. When these screws, with the longitudinal direction parallel with the upper side 7 of the table top, are slightly loosened, the upper portion and the lower portion may be shifted in a vertical direction in relation to one another. With partly tightened screws, it is further possible, under the action of the clamping screws 22, to apply the shanks 16 and 18 against the upper side 7 of the table top and its underside 8, respectively. Thereafter, it is appropriate to lock the upper portion and lower portion in relation to one another by hard tightening of the above-disclosed screws. In this case, the screws 22 serve as a safety precaution against sliding between the connecting portions 17 and 19.

The present invention may be further modified without departing from the spirit and scope of the appended Claims.

## Claims

1. A holder device for an anchorage device (4) of the type which is intended to secure, on a support (1) such as a table, a terminal arm, a lighting fixture or the like, and comprises an upper portion (14) with an upper shank (16) disposed above the support (1), a downwardly directed connecting portion (17) outside the edge (2) of the support, a lower portion (15) with a lower shank (18) located beneath the support, an upwardly directed connecting portion (19) outside the edge of the support, and means for interconnecting the upper portion and the lower portion in optional mutual positions, **characterized by** a retainer member (20) which is disposed to retain the connecting portions (17, 19) in an optional position for abutment against one another, and a clamping device (22) whose clamping direction is transversely directed, preferably approximately at right angles, to the plane of extent of the shanks (16, 18) for drawing the shanks towards one another.

2. The device as claimed in Claim 1, **characterized in that** the respective shanks (16, 18) of the upper portion (14) and the lower portion (15) make approximately a right angle with each respective connecting portion (17, 19, respectively).

3. The device as claimed in Claim 1 or 2, **characterized in that** the retainer member (20) is disposed for mutual adjustment of the shanks (16, 18) in the thickness direction of the support (1).

4. The device as claimed in any of Claims 1 to 3, **characterized in that** the retainer member (20) is designed as a stirrup which is secured in the one connecting portion (17, 19) and which embraces the other connecting portion (19, 17, respectively).

5. The device as claimed in Claim 4, **characterized in that** the stirrup is located at that end of the connecting portion (17, 19) which is turned to face away from its union with the shank (16, 18, respectively).

6. The device as claimed in any of Claims 1 to 3, **characterized in that** the retainer member (20) includes a screw which extends through a free aperture which is provided in the one connecting portion (17, 19) and which is preferably elongate in the thickness direction of the support (1), and into a correspondingly threaded aperture in the other connecting portion (19, 17, respectively).

7. The device as claimed in any of Claims 1 to 6, **characterized in that** the clamping device (22) includes a screw which extends through an aperture in the upper shank (16) and into a correspondingly threaded bore in the lower connecting portion (19), the longitudinal direction of the screw being approximately at right angles to the lower shank (18).

8. The device as claimed in any of Claims 1 to 6, **characterized in that** the clamping device (22) includes a screw which extends through an aperture in the lower shank (18) and into a correspondingly threaded bore in the upper connecting portion (17), the longitudinal direction of the screw being approximately at right angles to the upper shank (16).

9. The device as claimed in any of Claims 1 to 6, **characterized in that** the clamping device (22) includes a screw which extends through an aperture in either the upper (16) or the lower (18) shank and into a correspondingly threaded bore in the lower (18) or upper (16) shank, respectively, the longitudinal direction of the screw being approximately at right angles to the lower or upper shank, respectively.

10. Use of the holder device as claimed in any of Claims 1 to 9 in an anchorage device for a terminal arm, lighting fixture or the like and in which the anchorage device (4) is provided with a downwardly open, cup-shaped body (5) into which the upper shank (16) of the holder device (10) may be upwardly drawn by means of a screw (13), and a pin (9) for the pivotal securement of the terminal arm or lighting fixture onto the anchorage device.
